Europäisches Patentamt

European Patent Office

Office européen des brevets

(11) Publication number: **0 311 220**
**A2**

# EUROPEAN PATENT APPLICATION

(21) Application number: 88202264.3

(22) Date of filing: 17.10.83

(51) Int. Cl.⁴: **B07B 13/00 , B03B 5/00 , B01D 43/00 , B01D 35/20**

(30) Priority: 15.10.82 AU 6367/82

(43) Date of publication of application:
12.04.89 Bulletin 89/15

(60) Publication number of the earlier application in
accordance with Art.76 EPC: 0 122 270

(84) Designated Contracting States:
AT DE FR GB SE

(71) Applicant: JEWETT, Warren Read
2815 East Fort Lowell Road
Tucson, AZ 85716(US)

Applicant: NORMAN, Joseph R.
110 Jersey Road
Woollahra, NSW 2025(AU)

(72) Inventor: JEWETT, Warren Read
2815 East Fort Lowell Road
Tucson, AZ 85716(US)
Inventor: NORMAN, Joseph R.
110 Jersey Road
Woollahra, NSW 2025(AU)

(74) Representative: Jenkins, Peter David et al
Page White & Farrer 5 Plough Place New
Fetter Lane
London EC4A 1HY(GB)

(54) Improvements in or relating to the treatment of multi-phase systems.

(57) Multi-phase systems are treated to enhance separability of at least one phase by establishing the multi-phase system in predetermined relation to a transducer (24) and subjecting the so established system to at least two vibratory disturbances which differ from one another so as to thereby form respective wave trains at different frequencies within the audio frequency range and thus establish a beat frequency difference, said one phase being thereby separated from the other phase(s).

The expression "multi-phase systems" includes solid-solid systems such as mixtures of solid particles and also fluid characterised systems such as colloidal dispersions, suspensions and emulsions.

FIG.4

# IMPROVEMENTS IN OR RELATING TO THE TREATMENT OF MULTI-PHASE SYSTEMS

This invention relates to the art of chemical processing. More specifically, the invention is generally directed to the treatment of multi-phase systems to enhance the separability of the individual phase(s). In this specification, the expression "multi-phase systems" will be understood to include within its ambit all "plural" phase systems in respect of which separation is to be effected viz solid-solid systems, solid-fluid systems, fluid-fluid systems, liquid-liquid systems (the term "fluid" being generic to the term "liquid") and any variations thereof - as exemplified by mixtures of solid particles, colloidal dispersions, suspensions, emulsions and the like.

Methods and apparatus for enhancing the separability of discontinuous and dispersed systems are of course known to the art. Heretofore, however, the known separation techniques have invariably been directed to the separation of only some of the systems as specified above. The present invention represents a substantive development of the art in respect of both (i) the systems that can be and are separated, and (ii) the manner in which such separation is carried out.

The invention is additionally concerned with, and includes within its framework, previously uncontemplated industrial applications of the instant treatment. Thus the invention contemplates the treatment of mineral ores and the like (as elaborated hereafter), which latter treatment is characterised by utilisation of the said instant separation treatment. A substantive contribution to the art has thus been made.

In one aspect, the invention provides a method of treating a solid-solid multi-phase system to enhance the separability of at least one phase comprising the steps of:-

( i) establishing the multi-phase system in predetermined relation to a transducer or the like means, and

(ii) subjecting the so established system to at least two vibratory disturbances which differ from one another so as to thereby form respective wave trains at different frequencies within the audio frequency range, and thus establish a beat frequency difference,
the said one phase being thereby separated from the other phase(s) as required.

In a further aspect the invention provides a method of treating a multi-phase system, for example a fluid-characterised system such as a fluid (e.g. liquid)-solid system, to enhance the separability of at least one phase comprising the steps of:-

( i) establishing the multi-phase system in predetermined relation to a plurality of transducers, or the like means, the said transducers, or the like means, being angularly disposed in relation to one another, and

(ii) subjecting the so established system to at least two vibratory disturbances which differ from one another so as to thereby form respective wave trains at different frequencies within the audio frequency range, and thus establish a beat frequency difference,
the said one phase being thereby separated from the other phase(s) as required. In a modification of this aspect, the steps of the defined method can be employed to enhance the rate of reaction between the phases of a multi-phase system - especially between solid-liquid and liquid liquid components.

Relatedly, the invention additionally provides apparatus for carrying out the processes as set forth above. With reference to the said one aspect, the apparatus comprises a first, transducer or the like, means, and, associated therewith, second means whereby the said first means is subjected to at least two differing vibratory disturbances as set forth above. In relation to the said other aspect, the apparatus comprises a plurality of transducers, or the like means, angularly disposed in relation to one another and, in association therewith, further means whereby the said transducers, or the like means, are subjected to at least two differing vibratory disturbances again as set forth above.

Turning to the mentioned industrial applications of the instant treatment, the invention in one aspect provides a method of filtration, particularly adapted to the filtration of industrial fines, characterised in that a said filtrate is preliminarily subjected to a treatment as defined above. In a further aspect the invention provides a method for the extraction of mineral ores characterised in that, as a preextraction step, a said ore sample is preliminarily subjected to a treatment as defined above. In further associated aspects, the invention embraces the separation of emulsions (e.g. oil-water emulsions) and the enhancement (speeding up) of the rate of solid-liquid and liquid-liquid reactions and/or extractions.

The invention will now be described with particular reference to specific areas of detail. In the course of such ensuing description, other aspects of the invention will emerge. At this juncture, it is therefore emphasised that the ensuing description - and, indeed, the preceding definitions of some of the several aspects of the present invention - is (are) not to be limitatively construed.

In its first aspect, the invention can be utilised to separate ground solids, such as ores, the solids being positioned upon a transducer means - such as a surface as further exemplified by a vibratory plate (or the like) - which is substantially horizontally disposed and drivably connected to appropriate vibratory energy generating means. The plate may be of any material able to transmit vibrations; specifically it may be of laminated metallic or of other material (e.g. rubber, plastics) suitable for the carriage of ground solids, the vibratory energy being conveniently transmitted to the said plate at two or more points thereon. Being thus differentially vibrated, the plate is thereby subjected to a controlled beat frequency difference whereby material passing across or resting upon the plate is separated into distinct streams or collections of particles. When a particular component is to be separated, it will be found that, compared with the original unseparated material, it is at a higher concentration in one stream, and at a lower concentration in the other stream.

In its further aspect, the fluid (e.g. liquid)-solid or fluid-fluid (e.g. liquid-liquid) system - as exemplified by colloidal dispersions, suspensions, emulsions and/or solid-liquid, liquid-liquid reactants - may be disposed within a suitable container. Transducers - such as vibratory surfaces (e.g. plates), angularly disposed in relation to one another -are positioned within the system in the container and means for generating differential vibratory energy, as indicated above, are connected to each surface. The surfaces are thereby subjected to a controlled beat frequency difference whereby the requisite separation may (again) be carried out. This aspect of the invention is particularly adapted to industrial applications - such as increasing the rate of filtration of filtered fines, reducing the level of moisture retention in filtered fines, effecting improvements in mineral ore extraction procedures (such as gold extraction procedures) and generally increasing the rate of reaction in solid-fluid (e.g. liquid) and fluid-fluid (e.g. liquid-liquid) reactions.

The vibratory energy generating means, which subjects the system to at least two vibratory disturbances as indicated above, may be an electric, hydraulic or pneumatic motor (e.g. a variable speed electric motor) - or may be any other type of energy generating means such as a sonic wave generator. The wave trains may conveniently be at frequencies below 10000 cycles per second, such as 25-2000 (e.g. 40-200) cycles per second (for convenience, simply designated as cps hereafter). Beat frequency differences are conveniently of the order of 2 to 200 cps, preferably 3-30 and, more preferably, 4 to 10 cps. A so-established beat frequency difference will enhance the separation of the phases of the system - as will be demonstrated in the ensuing specific examples.

In angularly disposing the transducing surfaces (plates or the like) in relation to one another, the surfaces (or the like) may be set so that the angle between two or more of them is anywhere between 0 and 180°C. The setting of the transducing surfaces are of course dependent upon such factors as the material from which the surfaces are made, and flow rates and volume and vessel geometry (these criteria pertaining to the separation of fluid-characterised systems in batch or continuous operations as appropriate). The signal amplitudes are selected to accomodate variations in mass, flow rate and volume. Other variables affecting selection of operational parameters include the specific gravities of the system components, the effect of the addition of chemical reagent(s), and the Reynolds numbers within the flow path (where appropriate). Apart from 0° and 180°, typical settings would be 60°, 90° and 120°.

The invention will now be described with reference to the accompanying drawings and some specific numerical examples. As a prelude thereto, it is emphasised that such ensuing description is merely intended to be illustrative of the invention - and hence should be limitatively construed.

Referring firstly to the drawings:-

Figure 1 is a diagrammatic side view of one apparatus of, and employed in accordance with the method of, the invention.

Figure 2 is a partially diagrammatic perspective view of the apparatus of Figure 1.

Figure 3 is a partially diagrammatic perspective view of another form of apparatus of, and employed in accordance with the method of, the invention.

Figure 4 is a perspective view of yet another apparatus of, and employed in accordance with the method of, the invention.

Figure 5 is a sectional top view of the embodiment of Figure 4 taken through horizontal section A - A of Figure 4.

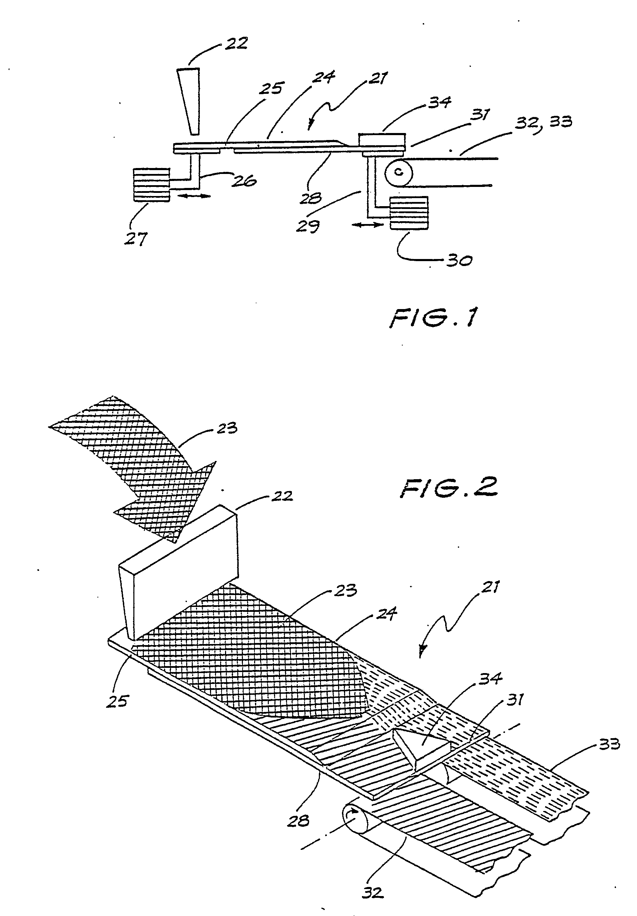

In Figures 1 and 2, which can be employed in the treatment of solid-solid multi-phase systems, the apparatus, generally designated by the numeral 21, includes a loading hopper 22 for the transmission of solid particulate material (e.g. a mixture of solids) onto a platten 24 (i.e. the transducer means). The platten is a horizontally disposed laminate of elastic material such as fabric reinforced butyl rubber. The upper of the two laminate sections, 25, is affixed via a mechanical connection 26 to a vibratory energy generating means 27 (designated "vibrator" hereafter). In like manner, the lower laminate section 28 is affixed via a mechanical connection 29 to a vibrator 30. The vibrators 27 and 30 may be driven, as indicated hereafter, at frequencies and amplitudes determined as those appropriate for the physical separation of two or more of the constituents of the particulate mixture. The arrows indicate direction of motion. Frequencies may be in the range 100-1000 cps - and a beat frequency difference between vibrators of 4 to 30 cps is maintained.

The platten 24 is pitched downwardly a few degrees towards end 31 (i.e. it has a slight tilt in the direction of flow) as illustrated. Mounted beneath are transducely spaced conveyor belts 32 and 33 for removal of the separated components of the material. Septum 34 aids in maintaining division between the separated particulates - and may be positioned in either side dependent upon the proportionality of materials in the particulate streams.

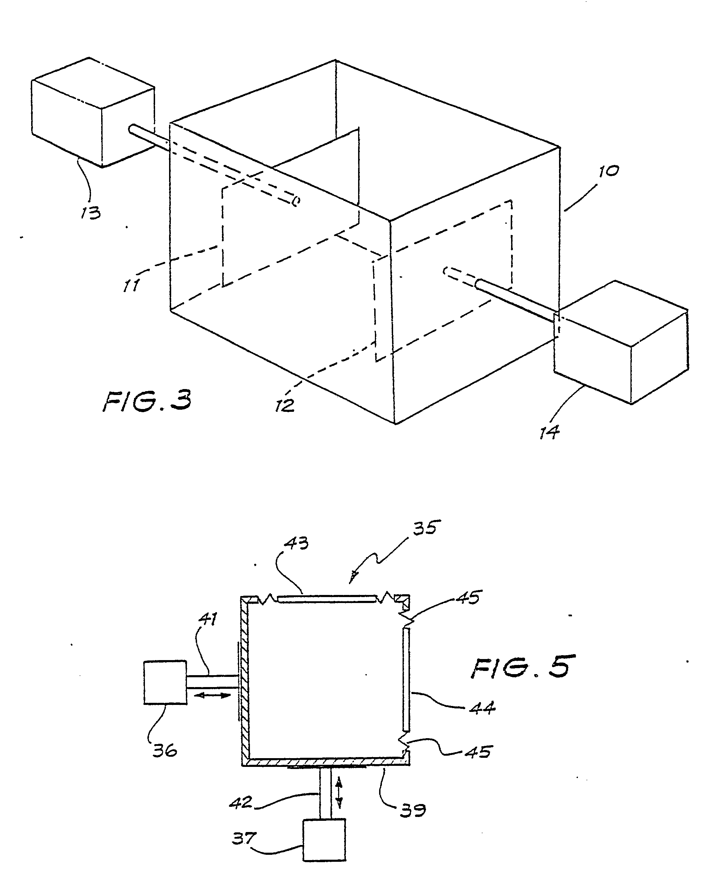

Figure 3 illustrates an embodiment of apparatus that can be employed in the treatment of a fluid-characterized multi-phase system. The apparatus includes a rectangular container 10 for holding the (components of the) system, the container being formed of any material that will not contaminate or react with the components, and which will be able to withstand the vibrations which will be set up during the performance of the method. Typically the container may be of metallic material - or may be made of glass of suitable plastics material.

Located within the container are a pair of spaced vibratory plates 11 and 12. These plates are connected, centrally, to respective vibrators 13 and 14. Frequencies, and beat frequency differences, may be as indicated heretofore.

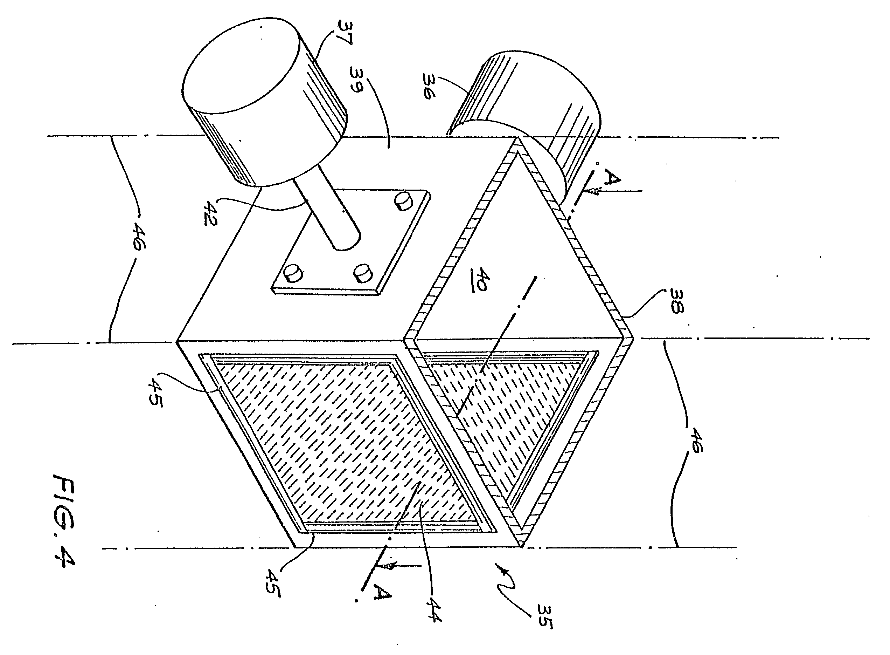

Figures 4 and 5 illustrate another form of invention that can be employed in the treatment of a fluid-characterised multi-phase system. The apparatus, generally indicated by the numeral 35, includes a rectangular container 40 for holding the components of the system. Acoustic vibrators 36 and 37 are orthogonally affixed to rigid walls 38 and 39 of the container 40 by means of respective flexible drive rods 41 and 42. Opposite to the rigid walls 38 and 39, are walls 43 and 44 which are constituted by rigid panels affixed to the main frame of the container by means of spring flexures 45. In an alternative, the entire opposite walls 43 and 44 may be panels made up of flexible material, such as reinforced elastic material (as exemplified by butyl rubber). The components of the system may be made to flow through the container 40 via conduits attached above and below (in path indicated by broken line 46). Frequencies and amplitudes of the vibrators 36 and 37 are selected as appropriate to the materials to be separated or to be process conditioned.

Frequencies may be in the range of 25-10000 cps - with a beat frequency difference in the range 2-100 cps. This form of apparatus could also be used in the separation of solid mixtures of components.

As indicated heretofore, the vibratory energy generating means (vibrators) may be of various types. Typically, the vibrators of the foregoing apparatus may be magnetic-type drivers which are capable of converting electrical energy into vibratory energy - for transmission to the vibratory surfaces. The electrical energy is transmitted to the magnetic drivers from variable signal generators via separate power amplifiers.

Proceeding with the examples - which (it is again emphasised) merely serve to illustrate the invention - the separation of a ground solid- multiphase system is firstly demonstrated. The examples are also illustrative of the separation of other phase systems and, relatedly, of the surprising and valuable manner in which the instant separation technique can be utilised in industrial processes not previously contemplated.

## EXAMPLE 1

A ground mixture of iron (100 mesh) and silica (30 mesh) was treated, utilising the apparatus illustrated in Figure 1. The mixture, designated by the numeral 23 in Figure 2, consisted of equal weights of iron and silica, the molecular proportion of the mixture components being 26% iron and 74% silica. As indicated heretofore, the platten 24 was substantially horizontally disposed, with a slight tilt in the direction of flow (as illustrated).

To effect the separation, the upper section 25 was vibrated at 145 cps by the vibrator 27 (i.e. the one at the left-hand end as illustrated) and the lower section was vibrated at 150 cps by vibrator 30 thereby establishing a controlled beat frequency difference of 5 cps. The mixture was found to separate into two fractions, a silica rich fraction which analysed at 5% Fe and 95% $SiO_2$, and an iron rich fraction which analysed at 70% Fe and 30% $SiO_2$.

## EXAMPLE 2

In this example, a solution of industrial fine coals - of particle size less than 0.5 mm and to which a flocculating agent (Separan AP 30 of concentration 2.5 mls/litre) had been appropriately added - was subjected to the following (comparative) treatment:

One half of the solution was filtered in conventional fashion. The other half of the solution was placed within the apparatus of Figure 3 comprising container 10 in which the spaced vibratory plates 11 and 12- centrally clamped, disposed at an angle of 180° to one another, and connected to vibratory energy generating means 13 and 14- are located.

The plates were respectively vibrated (amplitude of vibration 0.005 ins) at 92 cps and 82 cps respectively, thereby establishing a controlled beat frequency difference of 10 cps. This treatment was carried out for 10 minutes

The thus vibrated solution was then filtered in identical manner (in the same filter apparatus under the same conditions) to the said one half of the solution. The following results were obtained:

Blank (unvibrated half) filtration time 7.56 minutes.

Filtration time of vibrated half: 4.26 minutes.

This represents a dramatic reduction in filtration time of the order of 35%.

Relatedly, the moisture contents of the respective filtered fine coal samples (i.e. the resultant filter cake) showed a reduction in retained moisture of over 50% (non-vibrated sample approximately 22%; vibrated sample approximately 10%).

Using the separation treatment of the invention, filtration time can thus be reduced and, additionally, a reduction in the energy needed to dry the cake can (because of its reduced moisture content) be achieved.

EXAMPLE 3

Gold extractions: In this example, samples from a tailings dump, with gold concentrations of 4-5 grams per ton, were acted upon as follows:

A solution (45% concentration by weight of tailings) was loaded into apparatus of the type illustrated in Figure 3, comprising a rectangular steel tank, of 2 litre capacity, fitted with spaced vibratory plates each 5 cm square. The plates were disposed at an angle of 180° to one another and were connected (as heretofore) to appropriate vibratory energy generating means. The solution was adjusted - with water, water softener (Calgon) and sodium hypochlorite (4% free chlorine) - so as to give a free chlorine concentration, in the final solution, of up to 2%. The total volume (solution-tailings) was approximately 1.5 litres. The contents of the tank were heated to 80° C, and the plates were respectively vibrated (amplitude of vibration - 0.1 ins) at 150 cps and 144 cps respectively. A controlled beat frequency difference of 6 cps was thus established. This treatment was carried out for 4 - 10 minutes.

Following the above vibrator treatment, the slurry solution was conventionally filtered and the filtrate analysed for gold content. The analysis showed that 4.46 gram/ton of gold had been extracted from the tailings. Against the background of the fact that conventional extraction processes normally take considerable time (e.g. of the order of 2 to 20 hours), this result is extremely satisfactory.

Similar tests, conducted under the same vibratory conditions but with variations in solids concentration and temperature, showed that such factors also exercise some effect. Thus, a higher level of extraction was achieved with increase in temperature.

EXAMPLE 4

Separation of phases in an eucalyptus oil-water emulsion.

An emulsion of 20% eucalyptus oil in 80% water was formed by vigorous stirring with a propellor stirrer. The emulsion was placed in apparatus of the type illustrated in Figure 3 consisting of a rectangular tank of 2 litre capacity fitted with spaced vibratory plates, disposed at an angle of 180° to one another, and connected to vibratory energy generator means. The amplitude of vibration was 0.03 ins with respective vibratory frequencies of 58 cps and 53 cps, thus establishing a beat frequency difference of 5 cps. This treatment was carried out in 4 minutes. After this time, the emulsion was separated into two clear water and oil layers.

With a control sample of a similarly constituted emulsion, only partial separation was observed after many hours.

The foregoing examples have been generally illustrative of "batch" type operations. It will of course be appreciated that the invention also contemplates continuous process procedures - as indicated ty the preceding reference to (the influence of) flow rates. In such procedures, it may often be convenient to treat material sequentially with a number of frequency/beat sets of different values in order to enhance separation of multiple components. This may be accomplished by rapid successive shifts of vibratory frequencies within a single reaction vessel, or by providing a material flow path through a series of vessels each operating with a fixed frequency set. It will also be appreciated that the illustrated apparatus can be varied in non-essential aspects; for example the geometry of the container vessel can be other than rectangular - it could, for example, be tubular - whilst the configuration of the vibratory surfaces could be other than depicted.

In summary, there is provided, by the invention, a treatment technique whereby (i) multi-phase systems of all types can be efficaciously separated from one another and from any other fluid (e.g. liquid) and/or solid components that may be associated therewith, and (ii) filtration and/or extraction procedures (e.g. fluid from fine solids) and reaction procedures (e.g. fluid/fluid, fluid/fine solids) are enhanced. It is reiterated that matters of performance as set forth heretofore can be adjusted as required. As long as the basic criteria of the invention are observed, all such matters are to be regarded as variable in accordance with situational requirements, and as falling within the scope of the appended claims.

**Claims**

1. A method of treating a multi-phase system, to enhance the separability of at least one phase, comprising the steps of:-
(i) establishing the multi-phase system in predetermined relation to a plurality of transducers, or the like means, the said transducers, or the like means, being angularly disposed in relation to one another, and
(ii) subjecting the so established system to at least two vibratory disturbances which differ from one another so as to thereby form respective wave trains at different fequencies within the audio frequency range, and thus establish a beat frequency difference,
the said one phase being thereby separated from the other phase(s) as required.

2. A method as claimed in claim 1 modified in that the steps thereof enhance the rate of reaction between the phases of the multi-phase system.

3. A method as claimed in claim 1 or 2 in which the system is a two-phase system, wherein one phase is solid and the other phase is fluid, such as liquid, or both phases are fluid, such as liquid.

4. A method as claimed in any one of the preceding claims in which the wave trains are each at frequencies below 10000 cps, preferably/more preferably in the respective ranges 25-2000/40-200 cps.

5. A method as claimed in claim 4 in which the beat frequency difference is of the order of 2-200 cps, preferably/more preferably in respective ranges 3-30/4-10 cps.

6. A method as claimed in claim 3, or claim 4 or 5 when appendent thereto, wherein the two-phase system is a solid-liquid system and the solid-liquid system is a filtrate comprising industrial fines.

7. A method as claimed in claim 3, or claim 4 or 5 when appendant thereto, wherein the two-phase system is a solid-liquid system and the solid-liquid system comprises a mineral ore sample.

8. Apparatus for carrying out the method of claim 1 comprising a plurality of transducers, or the like means, angularly disposed in relation to one another and, in association therewith, further means whereby the said transducers, or the like means, are subjected to at least two differing vibratory disturbances which thereby establish a beat frequency difference.

9. Apparatus as claimed in claim 8 wherein the transducers, or the like means, are located within a container for the system.

10. Apparatus as claimed in claim 9 wherein the transducers, or the like means, form the adjacent walls of a container for the system.

FIG.1

FIG.2

FIG.3

13

11

12

10

FIG.5

43

35

41

45

36

44

45

42

39

37

FIG. 4